# EUROPEAN PATENT APPLICATION

(11) **EP 3 181 950 A1**
(43) Date of publication of application: **21.06.2017**
(21) Application number: 16199842.2
(22) Date of filing: 21.11.2016
(51) Int. Cl.: F16H 48/11

(54) **PARALLEL AXIS EPICYCLIC GEAR DIFFERENTIAL**

(30) Priority: 16.12.2015 US 201514970658
(71) Applicant: Atieva, Inc., Menlo Park, CA 94025 (US)
(72) Inventor: Riera, Luis A., Belmont, CA 94002 (US); Balazs, Palfai, Dublin, CA 94568 (US)
(74) Representative: Ungerer, Olaf

(57) **Abstract**

A compact planetary gear differential is provided that allows the sun gears to be placed in close proximity to one another. The inclusion of an idler gear that bridges the planet gears in each planetary gear set achieves a stronger gear set, and thus a differential configuration that is less susceptible to damage.

## Description

### FIELD OF THE INVENTION

The present invention relates generally to a vehicle and, more particularly, to a compact, lightweight, easily manufactured, parallel axis epicyclic gear differential.

### BACKGROUND OF THE INVENTION

Modern cars may use any of a variety of differential types, one of which is the spur gear differential. The original spur gear differential, which is the subject of U.S. Patent No. 691,591, was designed to provide an alternative to the bevel gear differential. In the spur gear differential disclosed in the '591 patent a pair of sun gears, preferably spur gears, are coupled to the left and right output shafts. The disclosed differential also includes multiple pairs of planet gears, arranged around the circumference of the sun gears, where one planet gear of each pair is coupled to one of the sun gears while the second planet gear of each pair is coupled to the second sun gear. The individual planet gears of each pair are designed to mesh together. Input power may be supplied to the differential, and in particular to the planet gear pairs, by a crown gear, where the crown gear may be in the form of a housing that substantially encloses the sun gears as well as the planet gear pairs. The planet gear spindles are coupled to the crown gear casing.

A modern variant of the original spur gear differential, sometimes referred to as the Schaeffler differential, is disclosed in U.S. Patent No. 8,480,532. As with the original spur gear differential, the Schaeffler differential uses multiple pairs of planet gears, preferably three sets, arranged around a pair of output sun gears. In order to achieve a more compact design while still retaining the manufacturing advantages associated with a spur gear differential, the sun gears in the Schaeffler differential employ a gear profile shift (i.e., an addendum modification), thus allowing the contact point between the two planet gears of each pair of planet gears to be shifted from between the sun gears to adjacent to the smaller sun gear.

While the improvements provided by the Schaeffler differential allow a reduction in differential size relative to the original spur gear differential, the strength of one of the two gear meshes is severely compromised due to the use of an extreme negative addendum modification. Accordingly, what is needed is a differential that provides a reduction in differential size without compromising gear strength. The present invention provides such a differential.

### SUMMARY OF THE INVENTION

The present invention provides a parallel axis epicyclic gear differential that includes (i) a first sun gear coupled to a first output drive shaft; (ii) a second sun gear with a diameter that is larger than the diameter of the first sun gear, where the second sun gear is coupled to a second output drive shaft; (iii) at least one planetary gear set, with each planetary gear set including (a) a first planetary gear coupled to a first gear shaft, where the first planetary gear meshes with the first sun gear and does not mesh with the second sun gear, (b) a second planetary gear coupled to a second gear shaft, where the second planetary gear meshes with the second sun gear and does not mesh with the first sun gear, and where a second planetary gear diameter corresponds to the second planetary gear, and (c) a third planetary gear coupled to the second gear shaft, where the third planetary gear is rigidly fixed to the second planetary gear, where a third planetary gear diameter corresponds to the third planetary gear, where the third planet gear diameter is smaller than the second planetary gear diameter, where the third planetary gear meshes with the first planetary gear, and where the third planetary gear does not mesh with the first sun gear and does not mesh with the second sun gear; and (iv) a differential housing, where the first sun gear and the second sun gear and the at least one planetary gear set are contained within the differential housing, where a crown gear rigidly fixed to the differential housing transfers drive power to the parallel axis epicyclic gear differential, and where the first and second gear shafts of the at least one planetary gear set are coupled to the differential housing.

In one aspect, the first and second gear shafts of the at least one planetary gear set are coupled via a plurality of bearing sets to the differential housing such that the first and second gear shafts are rotatable within the differential housing. The first planetary gear may be rigidly fixed to the first gear shaft, and the second and third planetary gears may be rigidly fixed to the second gear shaft. The first planetary gear and the first gear shaft may be fabricated as a single component; alternately, the first planetary gear may be fabricated separately from the first gear shaft and then rigidly fixed to the first gear shaft after fabrication. The second planetary gear and the third planetary gear and the second gear shaft may be fabricated as a single component; alternately, the second gear shaft may be fabricated separately from the second planetary gear and the third planetary gear and then, after fabrication, the second planetary gear and the third planetary gear may be rigidly fixed to the second gear shaft.

In another aspect, the rotational axis of the differential housing is coaxially aligned with a first centerline corresponding to the first output drive shaft and coaxially aligned with a second centerline corresponding to the second output drive shaft. Furthermore for each planetary gear set, the first rotational axis corresponding to the first planetary gear and the second rotational axis corresponding to the second and third planetary gears are preferably parallel to the rotational axis of the differential housing.

In another aspect, the first gear ratio that corresponds to the first sun gear, the first planetary gear and the third planetary gear is equivalent to the second gear ratio that corresponds to the second sun gear and the second planetary gear.

In another aspect, the first and second sun gears may have an equivalent number of teeth, i.e., the plurality of teeth corresponding to the first sun gear is equivalent to the plurality of teeth corresponding to the second sun gear; alternately, the first and second sun gears may have a non-equivalent number of teeth.

In another aspect, the at least one planetary gear set is comprised of a plurality of planetary gear sets spaced equally, or non-equally, about the rotational axis of the differential housing. Each planetary gear set may be independent of the adjacent planetary gear sets; alternately, the first planetary gear of each planetary gear set may be configured to mesh with the third planetary gear of the corresponding planetary gear set and to mesh with the third planetary gear of an adjacent planetary gear set.

In another aspect, the gear teeth corresponding to the first and second sun gears as well as the first, second and third planetary gears may be straight or helical.

A further understanding of the nature and advantages of the present invention may be realized by reference to the remaining portions of the specification and the drawings.

### BRIEF DESCRIPTION OF THE DRAWINGS

It should be understood that the accompanying figures are only meant to illustrate, not limit, the scope of the invention and should not be considered to be to scale. Additionally, the same reference label on different figures should be understood to refer to the same component or a component of similar functionality.
Fig. 1 provides a front perspective view of the sun gears and a single set of planet gears of a spur gear differential design in accordance with the invention;
Fig. 2 provides a rear perspective view of the gear assembly shown in Fig. 1;
Fig. 3 provides a front view of the gear assembly shown in Figs. 1 and 2;
Fig. 4 provides a rear view of the gear assembly shown in Figs. 1-3;
Fig. 5 provides a front view of a differential gear assembly utilizing six sets of planet gears in which each idler gear meshes with a pair of adjacent planet gears;
Fig. 6 provides a rear view of the gear assembly shown in Fig. 5;
Fig. 7 provides a perspective view of the differential housing used with the gear assembly of Figs. 5 and 6;
Fig. 8 provides an orthographic view of the second side of the differential housing shown in Fig. 7;
Fig. 9 provides a front view of a gear assembly similar to that shown in Fig. 3, except for the use of gears with helical teeth;
Fig. 10 provides a rear view of the gear assembly shown in Fig. 9; and
Fig. 11 provides a side view of the gear assembly shown in Figs. 9 and 10.

### DESCRIPTION OF THE SPECIFIC EMBODIMENTS

As used herein, the singular forms "a", "an" and "the" are intended to include the plural forms as well, unless the context clearly indicates otherwise. The terms "comprises", "comprising", "includes", and/or "including", as used herein, specify the presence of stated features, process steps, operations, elements, and/or components, but do not preclude the presence or addition of one or more other features, process steps, operations, elements, components, and/or groups thereof. As used herein, the term "and/or" and the symbol "/" are meant to include any and all combinations of one or more of the associated listed items. Additionally, while the terms first, second, etc. may be used herein to describe various steps, calculations, or components, these steps, calculations, or components should not be limited by these terms, rather these terms are only used to distinguish one step, calculation, or component from another. For example, a first calculation could be termed a second calculation, and, similarly, a first step could be termed a second step, and, similarly, a first component could be termed a second component, without departing from the scope of this disclosure.

The present differential design provides a compact configuration that allows the sun gears to be placed in close proximity to one another. In order to overcome the weaknesses associated with a traditional Schaeffler differential, a third gear is added to each planetary gear set, thereby achieving a stronger gear set and a differential that is less susceptible to damage.

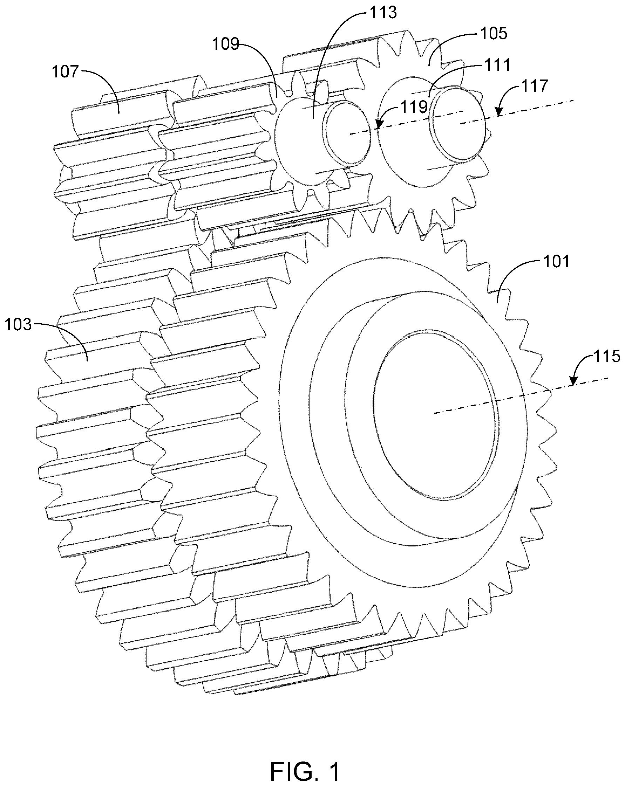

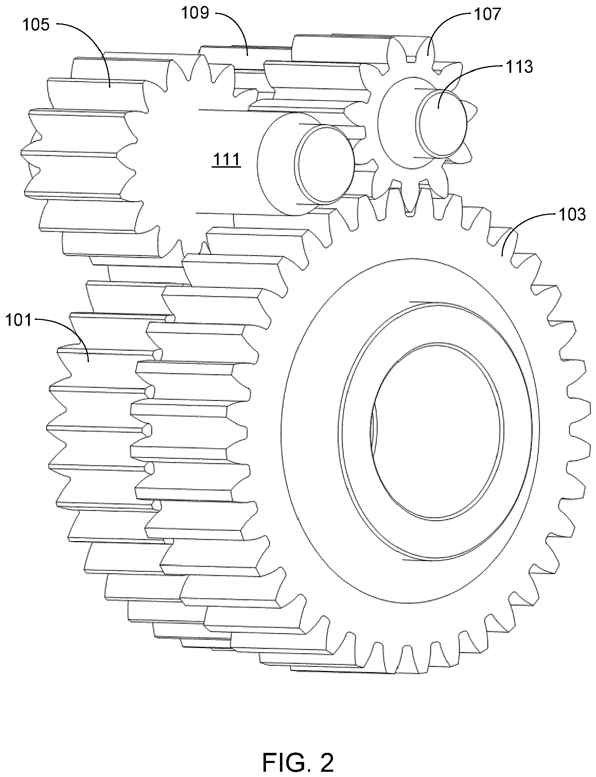

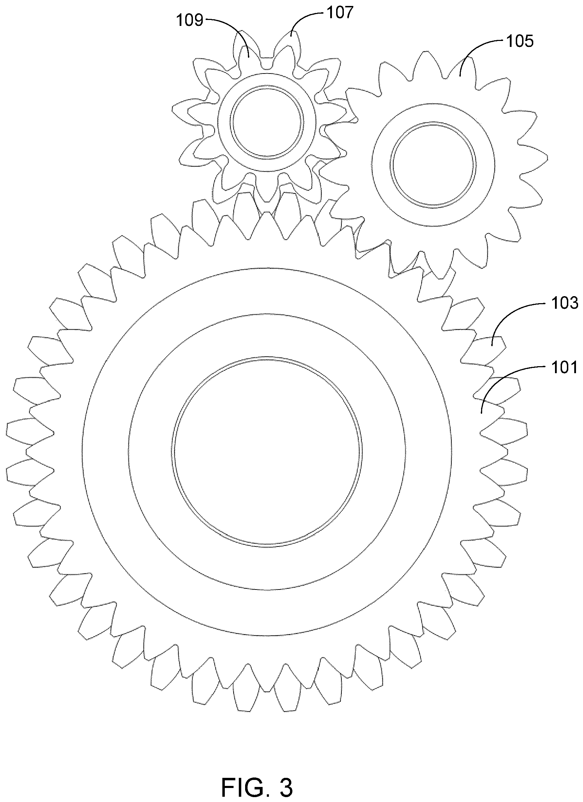

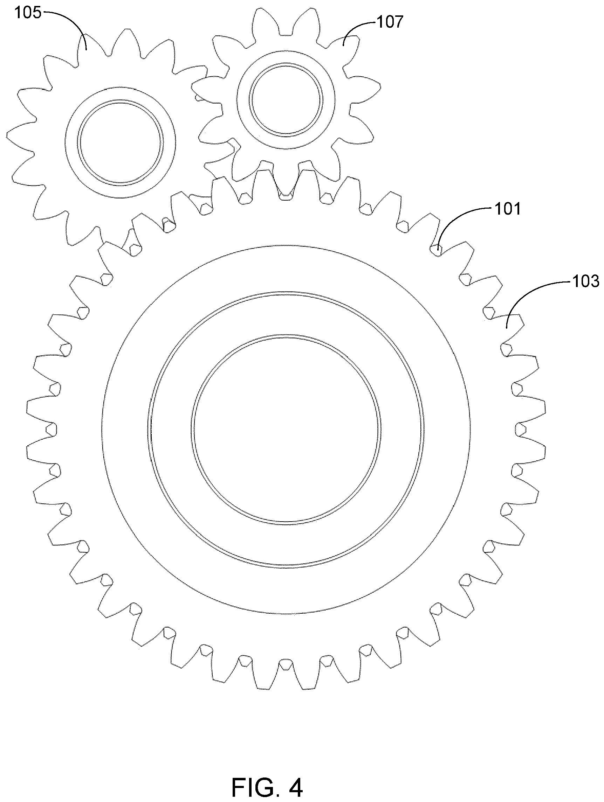

Figs. 1 and 2 provide front and rear perspective views, respectively, of the sun gears and a single set of planet gears of an epicyclic gear differential designed and configured in accordance with the invention. Figs. 3 and 4 provide similar, albeit plane, views of the gear assemblies of Figs. 1 and 2. As shown, the differential includes two sun gears 101 and 103, which are coupled to a pair of output drive shafts (not shown). Gears 101 and 103 are coaxial and rotate about axis 115. Preferably the sun gears are located in close proximity to one another, i.e., with minimal space separating the two gears, thereby providing a relatively compact differential design. Sun gear 101 has a smaller diameter than sun gear 103. Preferably both gears 101 and 103 have the same number of teeth in order to insure equal torque distribution, although a non-equivalent number of teeth may be used in sun gears 101 and 103 as long as equivalent gear ratios are maintained as noted below.

The differential of the invention also includes at least one, and preferably more than one, planetary gear set. Each planetary gear set includes a first planet gear 105 coupled to shaft 111, where gear 105 rotates about axis 117. Planet gear 105 engages, i.e., meshes with, sun gear 101. Each planetary gear set also includes two additional gears, 107 and 109, coupled to shaft 113. Gears 107 and 109 are rigidly coupled together and therefore rotate about axis 119 in unison and at the rate. Planet gear 107 engages, i.e., meshes with, sun gear 103. Rather than having planet gears 105 and 107 mesh as in a conventional Schaeffler differential, the present invention utilizes a third planet gear 109, which is both coaxial with and rigidly coupled to gear 107, to mesh with gear 105, thereby linking sun gear 101 to sun gear 103. Note that gear 105 does not engage with sun gear 103, nor does gear 107 engage with sun gear 101.

In order to achieve the desired differential action, the gear ratio of the two sets of gears should be equal. Thus the gear ratio of the first set of gears 101, 105 and 109 is equal to that of the second set of gears 103 and 107. Note that gear 105 is an idler gear so it does not affect the gear ratio between gears 101 and 109.

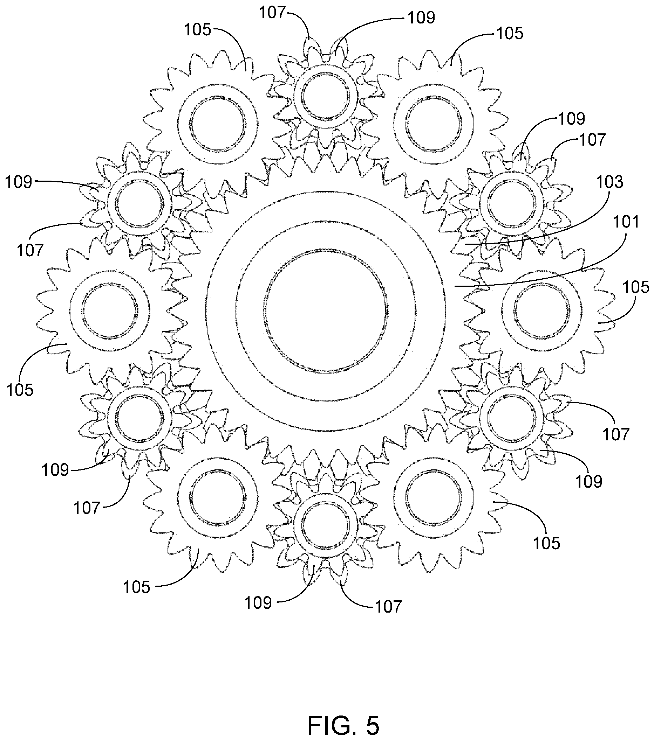

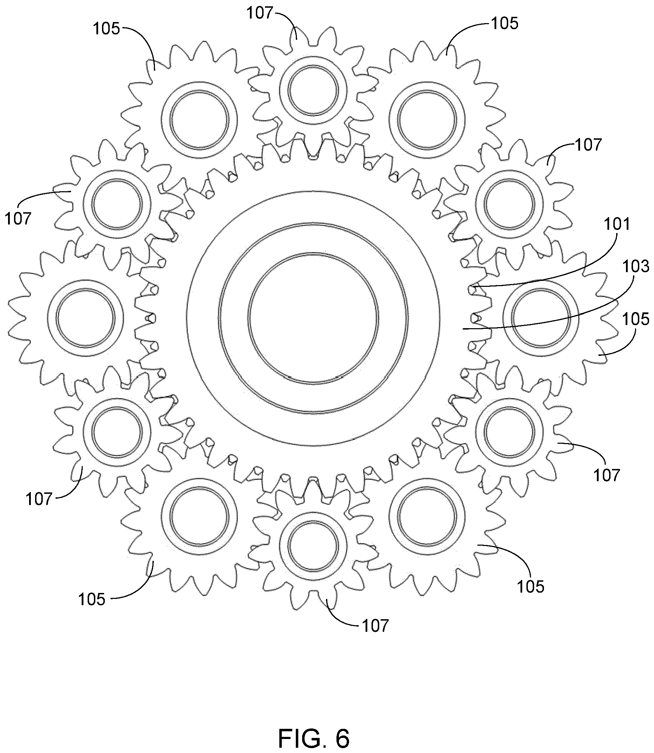

In Figs. 1-4 a single set of planet gears is shown. It should be understood, however, that the invention is not limited to a single set of planet gears. In general, increasing the number of planetary gear sets increases the strength of the differential since the applied forces are distributed rather than being focused on a few relatively small gear contact regions. For a conventionally sized differential, the inventors have found that five sets of planet gears are optimum if the planet sets are to be independent of one another. Alternately, and as preferred and illustrated in Figs. 5 and 6, the planet sets may be sized to allow idler gear 105 to mesh with a pair of gears 109, i.e., two different gears 109 from two different planetary gear sets. As shown in Fig. 5, each gear 105 meshes with a pair of gears 109. In this configuration the inventors have found that six sets of planet gears are optimum. When using multiple sets of planetary gears, they may be equally spaced or unequally spaced about the differential's rotational axis.

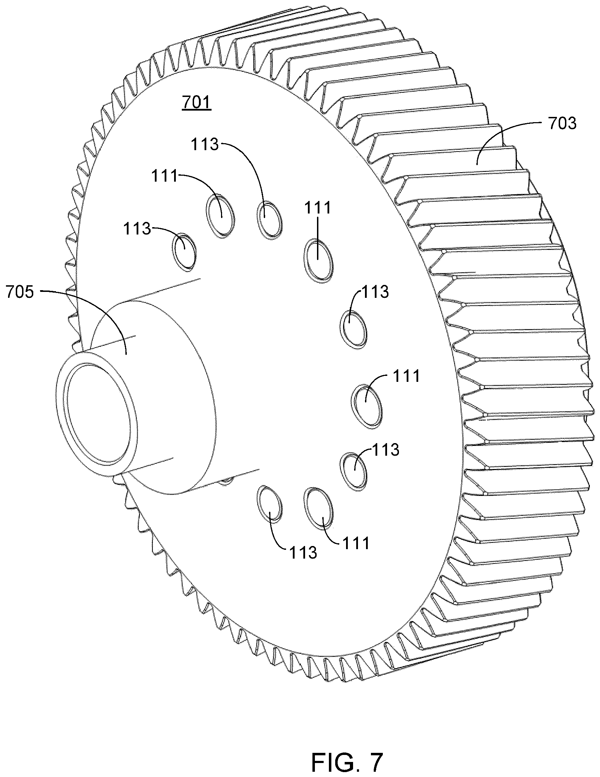

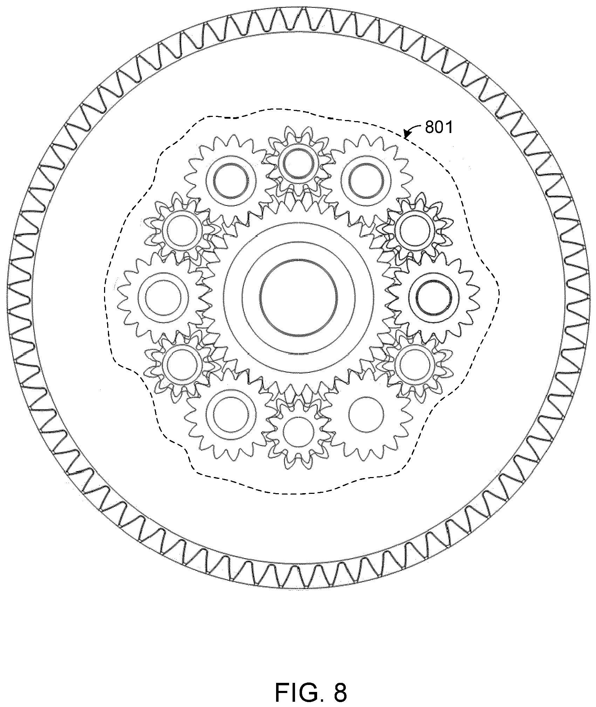

Fig. 7 provides a perspective view of a first side of the differential housing 701. Fig. 8 shows an orthographic view of the second side of the differential housing, this view including a cut-out along line 801 in order to allow the enclosed gear assembly to be seen. The two halves of the differential housing may be secured together using bolts, rivets, press-fittings, clips, etc. As visible in Fig. 8, sun gears 101 and 103 as well as the planetary gear sets, i.e., each set of planet gears 105, 107 and 109, are enclosed within differential housing 701. Power is transmitted to the differential housing via crown gear 703, with crown gear 703 rigidly coupled to the housing. The ends of the planet gear shafts 111 and 113 are coupled to the front and rear differential housing members. As noted below, the ends of the planetary gear shafts 111 and 113 may be rigidly coupled to the front and rear differential housing members, assuming that the planetary gears are free to rotate about the gear shafts, or the ends of the planetary gear shafts 111 and 113 may be rotatably coupled to the front and rear differential housing members, thereby allowing the planetary gears to be rigidly coupled to the gear shafts. The output drive shafts that are coupled to sun gears 101 and 103 pass through a pair of guide collars 705 located on either side of housing 701, one of which is visible in Fig. 7.

Gear 105 is incorporated into the differential housing such that it is able to freely rotate about axis 117. In at least one embodiment, bearing sets are used to allow gear shaft 111 to rotate relative to housing 701. Typically in this configuration gear 105 is rigidly fixed to shaft 111, either by fabricating the two as individual components and then fixing gear 105 to shaft 111, or by fabricating the two as a single component, for example using powder metal and a sintering process. If fabricated as a single component, typically post-fabrication machining of the gear shaft is required. Gear 105, and more specifically the teeth of gear 105, may also require post-fabrication finishing although for at least some applications the fabrication process provides gears of sufficient accuracy to minimize or altogether eliminate the need for post-fabrication finishing. In at least one embodiment, gear shaft 111 is rigidly coupled to housing 701 and gear 105 is coupled to shaft 111 via a bearing set, thereby insuring that gear 105 freely rotates about shaft 111, and thus axis 117, within the differential housing. Additionally it is possible to combine these embodiments and configure the gear set such that gear 105 rotates about shaft 111, and shaft 111 rotates within the housing 701, although this approach is not preferred since it unnecessarily adds to manufacturing complexity, component cost, and differential weight.

Similar to gear 105, gears 107 and 109, which are rigidly fixed together, must be free to rotate about axis 119. In at least one embodiment, bearing sets are used to allow gear shaft 113 to rotate relative to the differential housing. Although not required, preferably in this configuration gear 107 and gear 109 are rigidly coupled to gear shaft 113, either by fabricating the components separately and then rigidly fixing gears 107 and 109 to shaft 113, or by fabricating a single component consisting of gear 107, gear 109 and gear shaft 113. As noted above relative to gear 105 and shaft 111, post-fabrication finishing of the gear teeth may be required along with post-fabrication machining of the gear shaft (i.e., gear shaft 113). In an alternate embodiment, gear shaft 113 is rigidly coupled to the differential housing, and a gear set consisting of gears 107 and 109 are rotatably coupled to the gear shaft (using a bearing set(s)), thereby insuring that the gears are free to rotate.

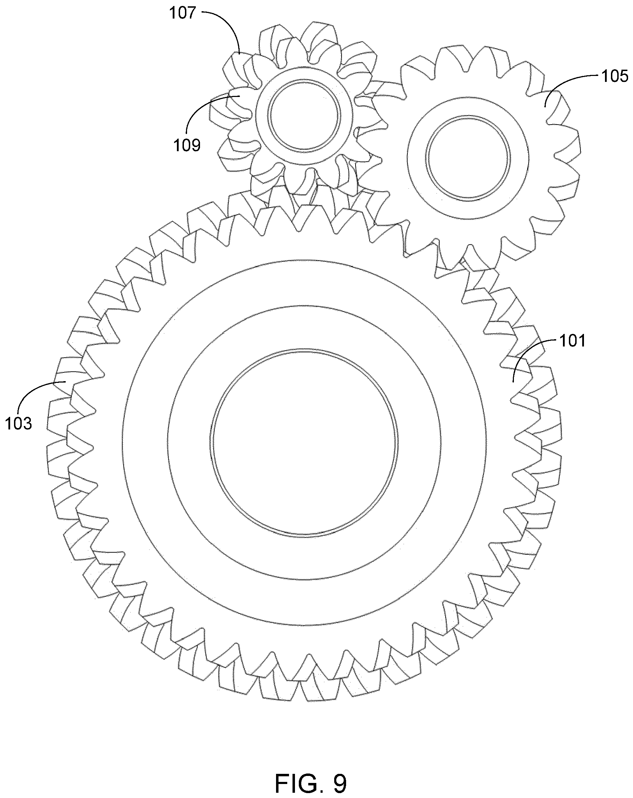

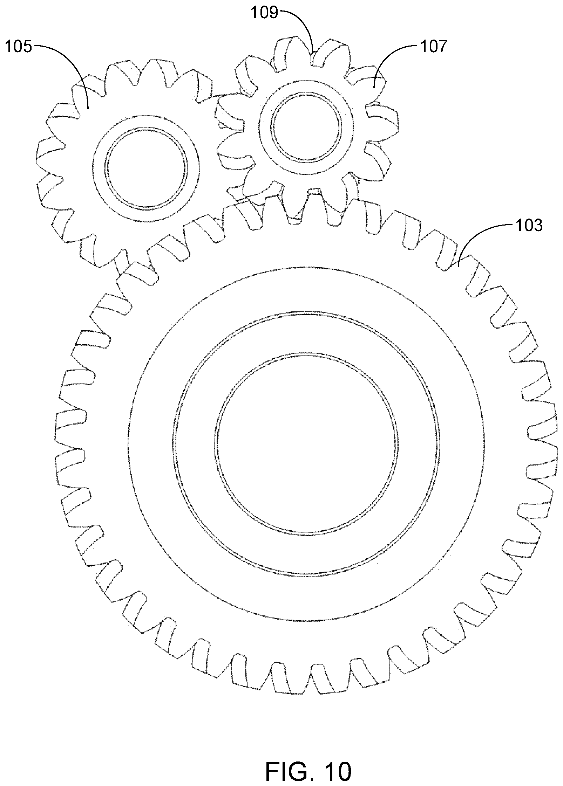

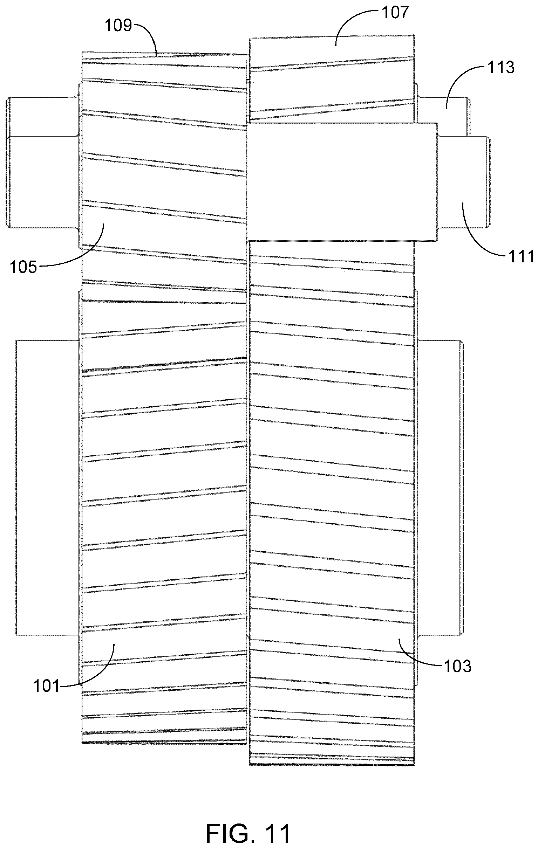

While the sun gears and planet gears shown in Figs. 1-6 utilize straight teeth, it should be understood that the invention is equally applicable to gear sets using helical teeth. For example, Figs. 9 and 10 provide front and rear views, respectively, of a gear assembly similar to that shown in Figs. 3 and 4 except for the use of helical teeth. Fig. 11 provides a side view of the same assembly.

Systems and methods have been described in general terms as an aid to understanding details of the invention. In some instances, well-known structures, materials, and/or operations have not been specifically shown or described in detail to avoid obscuring aspects of the invention. In other instances, specific details have been given in order to provide a thorough understanding of the invention. One skilled in the relevant art will recognize that the invention may be embodied in other specific forms, for example to adapt to a particular system or apparatus or situation or material or component, without departing from the spirit or essential characteristics thereof. Therefore the disclosures and descriptions herein are intended to be illustrative, but not limiting, of the scope of the invention.

## Claims

1. A parallel axis epicyclic gear differential, comprising:
a first sun gear, wherein a first sun gear diameter corresponds to said first sun gear, and wherein said first sun gear is coupled to a first output drive shaft;
a second sun gear, wherein a second sun gear diameter corresponds to said second sun gear, wherein said second sun gear diameter is larger than said first sun gear diameter, and wherein said second sun gear is coupled to a second output drive shaft;
at least one planetary gear set, each of said at least one planetary gear sets comprising:
a first planetary gear coupled to a first gear shaft, wherein said first planetary gear meshes with said first sun gear and does not mesh with said second sun gear;
a second planetary gear coupled to a second gear shaft, wherein said second planetary gear meshes with said second sun gear and does not mesh with said first sun gear, and wherein a second planetary gear diameter corresponds to said second planetary gear; and
a third planetary gear coupled to said second gear shaft, wherein said third planetary gear is rigidly fixed to said second planetary gear, wherein a third planetary gear diameter corresponds to said third planetary gear, wherein said third planetary gear diameter is smaller than said second planetary gear diameter, wherein said third planetary gear meshes with said first planetary gear, and wherein said third planetary gear does not mesh with said first sun gear and does not mesh with said second sun gear; and
a differential housing, wherein said first sun gear and said second sun gear and said at least one planetary gear set are contained within said differential housing, wherein a crown gear rigidly fixed to said differential housing transfers drive power to said parallel axis epicyclic gear differential, and wherein said first and second gear shafts of said at least one planetary gear set are coupled to said differential housing.

2. The parallel axis epicyclic gear differential of claim 1, said first planetary gear rigidly fixed to said first gear shaft, and said second and third planetary gears rigidly fixed to said second gear shaft.

3. The parallel axis epicyclic gear differential of claim 1, wherein a rotational axis of said differential housing is coaxially aligned with a first centerline corresponding to said first output drive shaft, and wherein said rotational axis of said differential housing is coaxially aligned with a second centerline corresponding to said second output drive shaft.

4. The parallel axis epicyclic gear differential of claim 3, wherein for each of said at least one planetary gear sets said rotational axis of said differential housing is parallel to a first rotational axis corresponding to said first planetary gear and to a second rotational axis corresponding to said second and third planetary gears.

5. The parallel axis epicyclic gear differential of any one of claims 1-4, wherein a first gear ratio corresponding to said first sun gear, said first planetary gear and said third planetary gear is equivalent to a second gear ratio corresponding to said second sun gear and said second planetary gear.

6. The parallel axis epicyclic gear differential of any one of claims 1-4, wherein a first plurality of teeth corresponding to said first sun gear is equivalent to a second plurality of teeth corresponding to said second sun gear.

7. The parallel axis epicyclic gear differential of any one of claims 1-4, wherein a first plurality of teeth corresponding to said first sun gear is not equivalent to a second plurality of teeth corresponding to said second sun gear.

8. The parallel axis epicyclic gear differential of any one of claims 1-4, wherein said at least one planetary gear set is comprised of a plurality of planetary gear sets, said plurality of planetary gear sets spaced equally about a rotational axis corresponding to said differential housing.

9. The parallel axis epicyclic gear differential of any one of claims 1-4, wherein said at least one planetary gear set is comprised of a plurality of planetary gear sets, said plurality of planetary gear sets spaced non-equally about a rotational axis corresponding to said differential housing.

10. The parallel axis epicyclic gear differential of any one of claims 1-4, wherein said at least one planetary gear set is comprised of a plurality of planetary gear sets, wherein said first planetary gear of each planetary gear set meshes with said third planetary gear of a corresponding planetary gear set and meshes with said third planetary gear of an adjacent planetary gear set.

11. The parallel axis epicyclic gear differential of any one of claims 1-4, wherein said at least one planetary gear set is comprised of a plurality of planetary gear sets, wherein each planetary gear set of said plurality of planetary gear sets is independent of an adjacent planetary gear set.

12. The parallel axis epicyclic gear differential of any one of claims 1-4, wherein a first set of gear teeth corresponding to said first sun gear are straight, wherein a second set of gear teeth corresponding to said second sun gear are straight, wherein a third set of gear teeth corresponding to said first planetary gear are straight, wherein a fourth set of gear teeth corresponding to said second planetary gear are straight, and wherein a fifth set of gear teeth corresponding to said third planetary gear are straight.

13. The parallel axis epicyclic gear differential of any one of claims 1-4, wherein a first set of gear teeth corresponding to said first sun gear are helical, wherein a second set of gear teeth corresponding to said second sun gear are helical, wherein a third set of gear teeth corresponding to said first planetary gear are helical, wherein a fourth set of gear teeth corresponding to said second planetary gear are helical, and wherein a fifth set of gear teeth corresponding to said third planetary gear are helical.
